(19) Europäisches Patentamt

European Patent Office

Office européen des brevets

(11) **EP 0 935 865 B1**

(12) **EUROPEAN PATENT SPECIFICATION**

(45) Date of publication and mention
of the grant of the patent:
**02.01.2004 Bulletin 2004/01**

(21) Application number: **97911210.9**

(22) Date of filing: **10.10.1997**

(51) Int Cl.⁷: **H04L 25/02**, H04L 12/40

(86) International application number:
**PCT/EP1997/005596**

(87) International publication number:
**WO 1998/017036 (23.04.1998 Gazette 1998/16)**

(54) **ELECTRICAL DATA COMMUNICATIONS COUPLER WITH VOLTAGE AND CURRENT MODE TRANSFORMER**

ELEKTRISCHER DATENKOPPLER MIT SPANNUNGS- UND STROMTRANSFORMATOR

COUPLEUR ELECTRIQUE DE COMMUNICATION DE DONNEES AVEC TRANSFORMATEUR DE TENSION ET COURANT

(84) Designated Contracting States:
**DE ES FR GB IT SE**

(30) Priority: **11.10.1996 DE 19642034**

(43) Date of publication of application:
**18.08.1999 Bulletin 1999/33**

(73) Proprietors:
  • **W.L. GORE & ASSOCIATES GmbH**
    **85640 Putzbrunn (DE)**
  • **British Aerospace Airbus Limited**
    **Bristol BS99 7AR (GB)**
  • **Airbus Industrie GIE**
    **31707 Blegnac Cédex (FR)**
  • **Constructiciones Aeronauticas S.A.**
    **Madrid (ES)**
  • **Airbus Deutschland GmbH**
    **21129 Hamburg (DE)**
  • **ILC DATA DEVICE CORPORATION**
    **Bohemia, New York 11716 (US)**
  • **AEROSPATIALE Société Nationale Industrielle**
    **75781 Paris Cédex 16 (FR)**

(72) Inventor: **OLSSON, Stellan**
    **D-91781 Weissenburg (DE)**

(74) Representative: **Klunker . Schmitt-Nilson . Hirsch**
    **Winzererstrasse 106**
    **80797 München (DE)**

(56) References cited:
**EP-A- 0 447 001       EP-A- 0 690 526**
**EP-A- 0 736 990       US-A- 5 301 208**

## Description

### Field of the Invention

The invention relates to electrical data communications equipment for transmitting digital data within a defined frequency range. The data communications equipment comprises a bus with a characteristic impedance and a plurality of couplers for coupling data onto and/or de-coupling it from the bus.

### Prior Art

Physically separated, multiple transmitter and/or receiver subsystems of a data communications system can be electrically connected to one another by means of this data communications equipment. One subsystem comprises either a data terminal directly connected to the bus or a branch line to which other subsystems are coupled. In the case of modern electronic systems for aviation, networks of data buses enable data transmission among physically separated subsystems, which comprise flight and navigation electronics and flight control devices.

In the aircraft industry, three data transmission approaches are currently employed using galvanic coupling to the bus.

1. Many present-day commercial aircraft are equipped with a system of buses in which one data bus is allocated exclusively to a single data source terminal (ARINC 429). Data emanating from this data source terminal can be picked up by any number of data receiver terminals connected to this data bus. The necessary wiring for this configuration can be fairly extensive because the electronic system of an aircraft can comprise a fairly large number of subsystems distributed throughout the aircraft and, consequently, widely separated from one another in some cases.

2. An approach using a multiplex data bus is required for many military applications (MIL Standard 1553). This approach is based on using a software-controlled central bus controller, which has supreme authority over the data bus and over all connected terminals. Each terminal can consist of transmitter and/or receiver terminals. This multiplex data bus approach significantly reduces the wiring of the electronics system of an aircraft, thus realising a reduction of weight and costs and an increase in reliability. A data bus with voltage mode is currently employed in this approach. That is, data are transmitted as voltage levels, which are sent over a twisted conductor pair used as the transmission medium. For a data bus having voltage mode, data are multiplexed between the data bus and the associated branching terminals by means of voltage mode interconnecting couplers configured as voltage transformers with primary windings. The leading-in wires of these windings are each connected to one of two bus lines. Each coupler has a coupler impedance, which is wired in parallel to the bus lines at the coupling position. At each coupling position, therefore, an impedance results from the parallel connection of the characteristic impedance of the bus and the coupler impedance and is, accordingly, lower than the characteristic impedance of the bus. Therefore, each branch coupling generates a jump in impedance, causing a negative reflection on the data bus of the electromagnetic waves sent over this bus. It is a reflected electromagnetic wave having a polarity opposite to the polarity of the wave sent over the data bus. Impedance mismatches and the resulting reflections at the coupling positions limit the number of data terminals capable of being connected to one data bus.

3. The most recent bus system used in commercial aircraft, designated as the "Multi-Transmitter Data Bus" (ARINC 629), is an approach having a multiple access and bidirectional protocol. Existing implementations of this system control the data bus in current mode. In this configuration, data are sent as a current level through a twisted conductor pair used as the transmission medium. Couplings to the data bus takes place via current mode coupling. In this case, current mode interconnecting current transformers can be used whose primary windings are inserted serially into one of the bus lines. As a result, an impedance develops at the coupling position that is greater than the characteristic impedance of the bus. This configuration also leads to a jump in impedance at each coupling position. This type jump in impedance generates a positive reflection of the electromagnetic waves sent over the data bus. It is a reflected electromagnetic wave having a polarity matching the polarity of the wave sent over the data bus. This reflection also limits the number of data terminals capable of being connected to one data bus.

US-A-4 264 827 describes an example of a bus system with current mode coupling to a bus by means of current transformers; the bus being formed by a twisted conductor pair.

A further bus system having a twisted pair is known from FR-A-2 612 019 (Lober et al.) assigned to Eléctricité de France. This discloses a current coupled data transfer device for transmitting to and receiving data from the bus.

US-A-4 622 535 (Ise et al.) assigned to Sharp K.K., Osaka, Japan, teaches a receiving circuit for a data transmaission system for transmitting and receiving data over a transmission line. US '535 teaches a voltage coupled data transfer device and a current coupled data transfer device. There is in this document, however, no discussion of the effect of the reflection of signals on the bus line of the data transmission circuit due to the effect of the additional impedances on the bus line created by the current coupled data transfer device and the voltage coupled data transfer device.

Summary of the Invention

The objective of the invention is to develop data communications equipment having a bus and couplers coupled to the bus in which at the coupling positions the equipment has litlle or no reflections.

This and other objects of the invention are achieved by:

a) providing at each coupling position of the bus both voltage mode coupling and current mode coupling, and

b) designing the reflection-responsible components of the couplers used in the invention to completely, or at least, essentially cancel out reflections of opposite polarity from voltage mode coupling and from current mode coupling.

The data communications equipment in accordance with the invention has, therefore, at each coupling position at least one voltage mode interconnecting voltage transformer and one current mode interconnecting current transformer. Their impedance-controlling components are matched to essentially cancel out the negative reflection caused by voltage mode coupling and the positive reflection caused by current mode reflection.

For more readily coupling the subsystems to the data bus, the secondary windings of the transformers can be provided with detachable plug connectors or hard wired. Using detachable connectors, source and/ or receiver data terminals can be directly connected or connected via subsystem buses. For practical embodiments, all coupler components taking part in forming the reflections need not necessarily be considered when cancelling out reflections of opposite polarity. There are components which strongly contribute to the formation of reflections and others whose percentage contribution to the formation of reflections is slight. Good results are obtained when only the components more strongly taking part in the formation of the reflections are considered when designing components for cancelling out reflections of opposite polarity.

A coaxial cable with an inner conductor and a shield wire enclosing this inner conductor and acting as an outer conductor can be used as a data bus. The inner and outer conductors constitute the two bus lines of the data bus. A twisted conductor pair, which forms the two bus lines, can also be used as a data bus. In this case, either no shielding is available, or each of the two bus lines has its own shield wire, or both bus lines are enclosed by a common shield wire.

Voltage mode coupling by means of the voltage transformer takes place when the primary winding of the voltage transformer bridges both bus lines at the coupling position. Current mode coupling takes place when the primary winding of the current transformer is inserted serially into one of the two bus lines at the coupling position. Using a coaxial cable as a bus line, the current transformer has a single primary winding, which is inserted serially into the inner conductor of the coaxial cable. Using a twisted conductor pair as a data bus, the current transformer has two primary windings, which are inserted serially into each one of the two twisted conductors.

To ensure reflection-free operations, the entire bus system may not have any bus line ends at which reflections occur. If a ring bus in which the bus is self-contained is used for the bus system, then a "termination" exists at all positions along the data bus with its characteristic impedance. If the data bus is not self contained, but has two bus ends, then the latter are terminated with an impedance equal to the characteristic impedance of the bus.

Description of the Figures

Fig. 1 is a first embodiment of the data communications equipment in accordance with the invention with a bus configured as a twisted conductor pair and with a plurality of couplers:

Fig. 2 is a portion of the data communications equipment shown in Fig. 1. schematically depicting a coupler;

Fig. 3 is a second embodiment of the data communications equipment in accordance with the invention with a bus configured as a coaxial cable and with a plurality of couplers;

Fig. 4 is an equivalent circuit diagram of of the data communications equipment shown in Fig. 1 or 3:

Fig. 5 is a modified form of the equivalent circuit diagram shown in Fig. 4, in which the resistive impedances have been ignored;

Fig. 6 is an equivalent circuit for the voltage coupling mode portion;

Fig. 7 is an equivalent circuit for the voltage transformer;

Fig. 8 is an equivalent circuit for the current coupling mode portion;

**Fig. 9** is an equivalent circuit for the current transformer; and

**Fig. 10** is an equivalent circuit for the circuit of Fig. 2;

**Fig. 11** shows the signal on the bus.

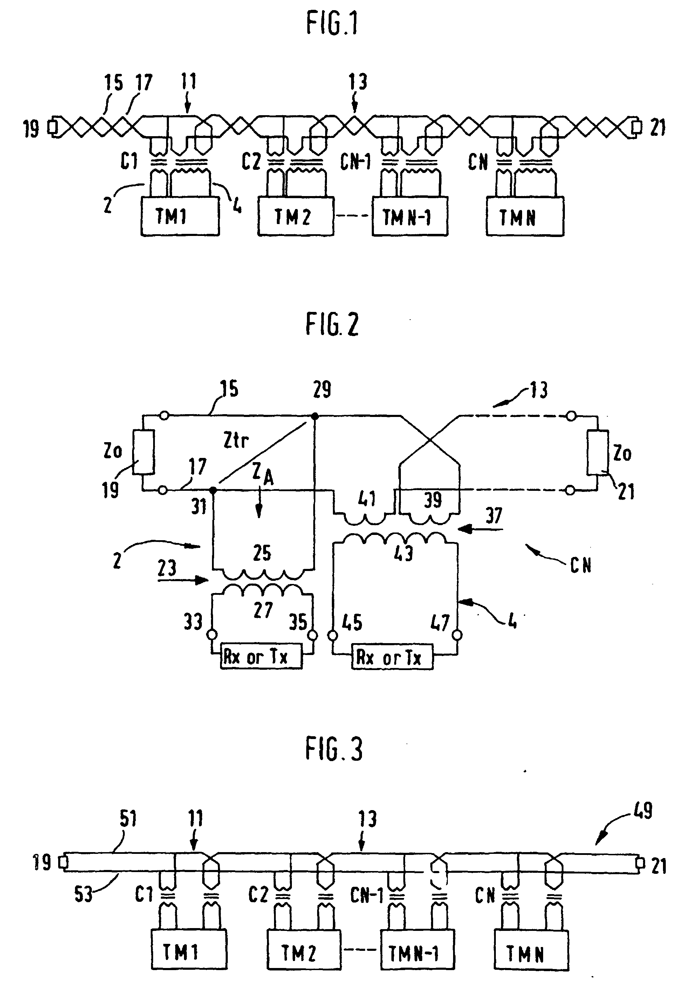

Fig. 1 schematically illustrates data transmission equipment 11 with bus 13, which is configured as a twisted shielded pair with a first bus line 15 and with a second bus line 17 and which has a characteristic impedance Zo. As is known in the art, a twisted shielded pair comprises two wires with a centre conductor embedded within an insulator which are twisted together. A shield is then placed around the twisted wires. In the preferred embodiment of the invention, the centre conductor is made of a copper wire and the insulator of expanded PTFE such as that provided by W.L.Gore & Associates GmbH, Pleinfeld, Germany. However, other materials made be used for the centre conductor and insulators. In the preferred embodiment of the invention, the twisted shielded pair is a balanced line, i.e. having a defined characteristic impedance Zo between the two bus lines 15 and 17 and both bus lines 15 and 17 having essentially the same time delay. One of the two bus lines 15, 17 transmit the positive part of data signal whilst the other of the two bus lines 15, 17 transmits the negative part of the data signal.

At the ends of the cable, bus 13 is terminated with terminating impedance 19 or 21, respectively, each having an impedance equal to the characteristic impedance Zo of the bus. A plurality of terminals TM1, TM2 ... TMN-1 and TMN has been configured along bus 13 and are separated from one another. Each terminal TMN can be a transmitter and/or receiver device. Each of the terminals TM1 through $TM_N$ is coupled to bus 13 by means of a related coupler C1, C2 ... $C_{N-1}$ or $C_N$. Each of the couplers CN comprises a voltage mode coupling portion 2 shown on the left side of Fig. 1 for voltage mode coupling to bus 13 and a current mode coupling portion 4 shown on the right side of Fig. 1 for current mode coupling to bus 13. The voltage mode coupling portion 2 could be on the right side and the current mode coupling portion 4 in the left side.

One of the couplers CN is now examined in more detail in Fig. 2. In addition to bus 13 with bus lines 15 and 17 and characteristic impedance mode terminating impedances 19 and 21, only a single coupler CN for the termination of one of the terminals is shown in the figure. In accordance with the invention, this coupler comprises the voltage mode coupling portion 2 and the current mode coupling portion 4.

The voltage mode coupling portion 2 comprises a voltage transformer 23 with a primary winding 25 and a secondary winding 27. The primary winding 25 of the voltage transformer 23 bridges both the bus lines 15 and 17 by connecting the ends of the primary winding 25 to bus lines 15 or 17 at connection points 29 and 31.

This can be carried out for example by means of a soldered joint. Secondary winding 27 of the voltage transformer has ends 33 and 35 which can be provided with connector elements (not shown in the figure) or hard wired to a transmitter/receiver device. By means of the connector elements, a transmitter device or receiver device can be connected to ends 33 and 35, e.g., via a detachable plug connector (the connection is not shown in the figure). This is represented in Fig. 2 by a load impedance Rx or Tx which represent respectively the impedance of a receiver device or a transmitter device. Devices which are exclusively sources or exclusively receivers or which can function both as sources and receivers can be connected to the couplers.

Current transformer 37 is designed for current mode coupling; it has two primary windings 39 and 41 and one secondary winding 43. First primary winding 39 of the current transformer 37 is inserted serially into the first bus line 15, while the second primary winding 41 is inserted serially into the second bus line 17. The secondary winding 43 of the current transformer has two free ends 45 and 47 to which a current mode coupled portion of a device can be connected. This connection can also be made by means of a plug connector. The connected device may be either a receiver device or a transmitter device. The load on the current transformer is represented by load impedance Rx or Tx.

Fig. 3 shows a second embodiment of data communications equipment 11 in accordance with the invention. This embodiment consists of bus 49 in the form of a coaxial cable with centre conductor 51 and outer conductor 53. Like Fig. 1, bus 49 is designed with terminating impedance 19 or 21, respectively, at the ends of the cable. This terminating impedance is equal to characteristic impedance Zo of bus 49. As in Fig. 1, terminals TM1 through $TM_N$ are coupled by means of couplers C1 through $C_N$. As in Fig. 1, each coupler comprises voltage mode interconnecting voltage transformer 23 and current mode interconnecting current transformer 37, as shown in the embodiment in Fig. 2. Diverging from the embodiment in Fig. 1, current transformer 37, shown in the embodiment in Fig. 3, has only a single primary winding 39, which is inserted serially into bus line 51 of bus 49. Otherwise. the embodiments shown in the two figures are similar. This also applies regarding the representation in Fig. 2 which can be used when analysing the embodiment shown in Fig. 3 if second primary winding 41 of the current transformer is eliminated.

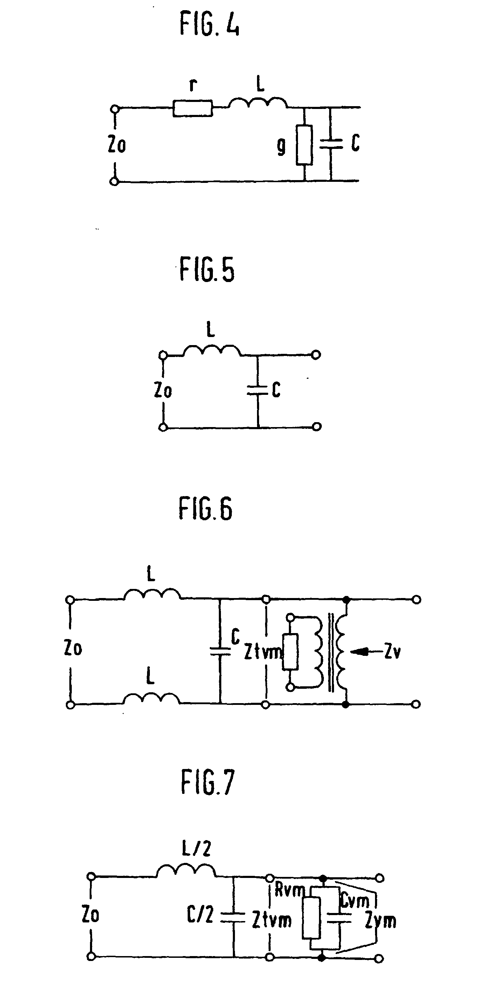

The bus 13 or 49 can be thought of as a long filter chain with a plurality of inductances in series and a plurality of capacitances in parallel to the bus lines 15, 17, 51, 53. This is depicted in Fig. 4 in which r represents the series resistance of the bus lines 15, 17, 51 and 53, L the inductance of the bus 13, 49, g the parallel resistance due to leakage of current through the dielectric insulator between the bus lines 15 and 17 or 51 and 53. C is the capacitance between the bus lines 13, 49, e.g.

the capacitance between the two individual conductors 15 and 17 in the embodiment of Fig. 1 or the capacitance between the centre conductor 51 and the outer conductor 53 in the embodiment of Fig. 3.

The characteristic impedance Zo of the bus 13, 49 is then given by the following equation:

$$Zo = \sqrt{r + j\omega L / g + j\omega C} \qquad (1)$$

The bus 13, 49 of the invention is used at bit rates of 2 Megabits which implies a signal frequency of 6 MHz. At these high frequencies, the series resistance g and the parallel resistance g are negligible in comparison to the impedance of the inductor L and the capacitance C in the above equation (1 ). Thus the bus 13 or 49 can be represented by a circuit as shown in Fig. 5 and the characteristic impedance by the following equation:

$$Zo = \sqrt{L/C} \qquad (2)$$

It will be noted in passing that the circuit of Fig. 5 is a low pass filter.

Now let us consider the effect of the voltage mode coupling 2 due to one of the terminals TMN on the bus 13 comprising the twisted shielded pair forming a balanced line as shown in Fig. 1. The equivalent circuit of the voltage mode coupling 2 alone is shown in Fig. 6. It will be noted that two inductances L are shown in this equivalent circuit. Each represents the inductance of one of the bus lines 15 or 17 of the twisted shielded pair. C is the capacitance between the bus lines 15 and 17. Ztvm is the change of impedance of the bus 13 created by adding the voltage coupling portion 2 to the balanced line of the bus 13. Zvm is the impedance of the voltage coupling portion 2 alone. As is shown in Fig. 7 which depicts the equivalent circuit of the voltage transformer 23 in the bus 13, Zvm can be represented by a resistance Rvm and a capacitance Cvm in parallel with each other and placed between the bus lines 15 and 17 of the bus 13. For simplicity, Fig. 7 shows only one of the bus lines 15 or 17 and thus the values of the capacitance C and inductance L are reduced by a half. The value of Zvm is given by the following equation:

$$Zvm = 1 / (Rvm + Cvm) \qquad (3)$$

The impedance Zvm of the voltage coupling is connected in shunt with the impedance Zo of the bus and this results in an impedance mismatch between the points 29 and 31 (shown in Fig. 2) at which the voltage coupler 2 is connected. This impedance mismatch will cause a reflection of a wave representing a data signal on the bus 13. The reflection is negative as the effect of the voltage coupling impedance Zvm being parallel to Zo is to give Ztvm a reduced impedance compared with the characteristic impedance of the bus 13 Zo. The value of Ztvm is then given by:

$$Ztvm = (Zo / Zvm) \qquad (4)$$

and the coefficient of reflection CRvm for the voltage coupler 2 is thus

$$CRvm = (Ztvm - Zo) / (Ztvm + Zo) \qquad (5)$$

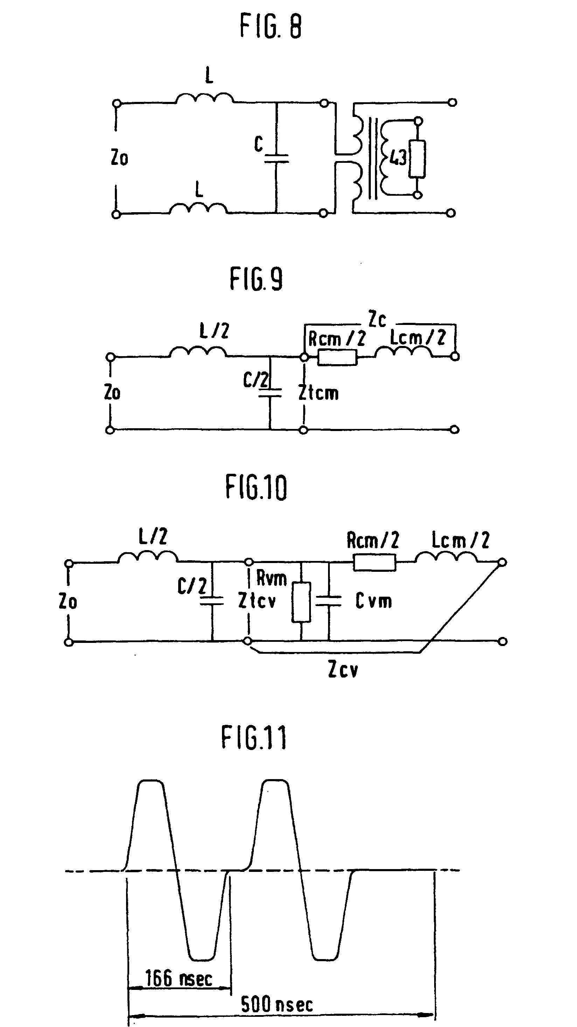

Fig. 8 shows the circuit for the embodiment of Fig. 1 for the current mode coupling 4 alone. This can be represented by the equivalent circuit shown in Fig. 9. It will be noted in this circuit that the value of the inductances of the bus 13 and the capacitance between the two bus lines 15 and 17 have been reduced by half since we consider only the effect of the current mode coupling on one of the bus lines 15 or 17. The current transformer 37 may then be represented in this circuit by a load impedance Rcm/2 and an inductance Lcm/2 in series with one of the bus line 15 or 17. The sum of load impedance Rcm/2 and the inductance Lcm/2 give a total impedance Zcm:

$$Zcm = Rcm/2 + Lcm/2 \qquad (6)$$

This results in an impedance mismatch Ztcm which causes a reflection of a wave propagating on the bus 13 and which is calculated from:

$$Ztcm = Zo + Zcm \qquad (7)$$

The reflection is positive as Zcm is in series to the bus impedance Zo thus giving Ztcm an increase impedance compared with Zo. The coefficient of reflection CRcm due to the current mode coupling is then calculated from the formula:

$$CRcm = (Ztcm - Zo) / (Ztcm + Zo) \qquad (8)$$

Having understood the effect of the voltage mode coupling 2 and the current mode coupling 4, these principles can be applied to the embodiment of Fig. 2. Fig. 10 shows an equivalent circuit for the embodiment of the invention depicted in Fig. 2 in which the equivalent circuits shown in Fig. 7 and Fig. 9 have been incorporated. The impedance Zcv of the voltage mode coupling 2 and the current mode coupling combined is then given by the following equation:

$$(Rcm/2 + Lcm/2) / (Rvm + Cvm) = (Zcv)^2 \qquad (9)$$

No reflection of a wave travelling down a bus will then occur if the impedance Zcv matches the characteristic impedance Zo, i.e.

$$Zcv = Zo \qquad (10)$$

Thus reflection compensation will be achieved if

$$\sqrt{(Rcm/2 + Lcm/2) / (Rvm + Cvm)} = Zo \qquad (11)$$

This may be alternatively expressed by the equation:

$$Ztvm + Ztcm = 0 \qquad (12)$$

or,

Thus by a suitable choice of the current mode load impedance Rcm, the voltage mode load impedance Rvm, the current mode load inductance Lcm and the voltage mode load capacitance Cvm. devices may be attached to the bus which cause no reflection of a wave travelling down a bus 13.

In the preferred embodiment of the invention the transmitter channel is chosen to be a voltage mode coupling device 2 and the receiver channel is chosen to be a current mode coupling device 4. The reason for this is that if the current mode coupling device 4 were used as a transmitter channel, then it would offer very high impedance to the bus 13 when it were not transmitting which would have to be compensated in other ways. The receive channel preferably offer high impedance to the bus 13 at all times and thus is most advantageously chosen to be the current mode coupling device 4.

The form of a low pass filter has been noted in passing to be depcited in Fig. 5. It will be observed from Fig. 7 that the voltage transformer will act as a low pass filter if Rvm is small which is the case in practice. Thus Fig. 7 can be seen to be a low pass filter. In the currently designed embodiment of the invention, the signal on the bus 13 is essentially a square wave having a bit rate of 2 Megabits as is depicted in Fig. 11. The transmitted signal wave is defined as doublets with a half doublet having a positive/negative lobe with a frequency equal to 6MHz. As is known from electronics, the square wave has a large number of sine wave harmonics. Foureirt transform analysis of the power distributed over the harmonic frequencies in the doublet singal wave (Fig. 11) of the constructed embodiment showed that 99% of the power was contained in signals with harmonic frequencies below 80 MHz. This therefore places a maximum value which Cvm may take in order to ensure that signals with this highest frequency pass along the bus 13. The maximum value of Cvm is calculated from the following equation:

$$1 / 2\pi f_g \, Cvm < Zo \qquad (13)$$

where $f_g$ is the cut-off frequency of the low pass filter, i. e. the required maximum frequency which has to pass through the low pass filter, in the preferred embodiment 80 MHz. The characteristic impedance Zo of the bus 13 is dependent on the cables used in the bus and generally has a value between approx. 50 $\Omega$ and 130 $\Omega$. In the constructed embodiment the characteristic impedance Zo is 75 $\Omega$. This will therefore give a maximum capacitance Cvm of 26 pF.

It is well known in the art to design a transformer such that it will have a capacitance of Cvm. For example, the book Reference Data for Radio Engineers published by Howard W. Sams & Co., Inc. may be referenced.

Having calculated the value of Cvm required, one may use equation (11) above and ignore the values of Rvm and Rcm (which are negligibly small) to calculate the value of the inductance for the current transformer required in order to ensure zero reflection. This gives a value of Lcm as:

$$Zo^2 \, Cvm = Lcm \qquad (14)$$

Using the values calculated in equation (13), this means that the current transformer inductance should be 146 nH if the voltage transformer capacitance Cvm is 26 pF. It is known by transformer designers that changing the number of windings, the dimensions of the wires within the transformer, the lacquer used on the wires and its core will alter the inductance of the transformer. Thus by suitable selection and reference to standard textbooks - such as that cited above - will allow the man skilled in the art to develop a current transformer which fulfils the condition of equation (14).

Having thus designed the current transformer and the voltage transformer, devices TMN may be attached to the bus which cause little or no reflection of a wave travelling down a bus 13. In the constructed embodiment of the invention a group of five couplers TMN were placed together in a cluster. It was found that attenuation and reflection losses from such a coupler cluster were below 0.1 dB per cluster.

## Claims

1. Electrical data communications equipment (11) for transmitting digital data within a frequency range comprising:

a) a bus (13; 49) for transmitting travelling waves of data which has a characteristic impedance (Zo) and which ends are terminated with a terminating impedance (19; 21) and
b) a plurality of couplers (CN) configured at positions along the bus (13; 49) for coupling data onto the bus (13; 49) and for de-coupling it from of the bus (13; 49),

**characterised in that**
said coupler (CN) has both

a) a voltage mode voltage transformer (23) interconnecting with the bus (13; 49) and causing on the bus (13; 49) a negative signal reflection vis-a-vis the polarity of the travelling wave of data, the voltage mode voltage transformer (23) having a voltage transformer impedance, and
b) a current mode current transformer (37) interconnecting with the bus (13; 49) and causing on the bus (13; 49) a positive signal reflection vis-a-vis the travelling wave of data, the current mode current transformer (37) having a current transformer impedance, and whereby the voltage transformer impedance and the current transformer impedance are matched such that signal reflections of opposite polarity on the bus (13; 49) caused by the voltage transformer (23) and by the current transformer (37) are substantially eliminated.

2. Data communications equipment (11) in accordance with Claim 1
wherein the bus (13; 49) is configured as a ring.

3. Data communications equipment (11) in accordance with Claim 1 or 2
wherein the bus (13; 49) has two ends, each of which is terminated with the terminating impedance having substantially the same value as the value of the characteristic impedance (Zo) of the bus (13; 49).

4. Data communications equipment (11 ) in accordance with any of the above claims
wherein

a) the voltage transformer (23) has one primary winding (25) and one secondary winding (27) and
b) the current transformer (37) has at least one primary winding (39; 41 ), and one secondary winding (43), the at least one primary winding (25, 39, 41) being each connected to the bus (13; 49) and a data transmitter and/or a data receiver being connected to the secondary windings (25, 43).

5. Data communications equipment (11) in accordance with any of the above claims
wherein the bus (13) has two mutually twisted bus lines (15, 17) and between these two bus lines (15, 17), a terminating impedance (19, 21) equal to the characteristic impedance (Zo) of the bus (13; 49) is connected at each end of the bus.

6. Data communications equipment (11) in accordance with Claim 5
wherein each of the two bus lines (15, 17) is enclosed by a shield wire.

7. Data communications equipment (11) in accordance with Claim 5
wherein both bus lines (15, 17) are enclosed by a common shield wire.

8. Data communications equipment (11) in accordance with Claim 4
wherein

a) the primary winding (25) of the voltage transformer is connected between both bus lines (15, 17) and
b) the current transformer (37) has two primary windings (39, 41) each of which is inserted serially into one of the two bus lines (15, 17).

9. Data communications equipment (11) in accordance with Claim 8
wherein the ends of the primary winding of both transformers (23, 37) are connected to the bus lines (15, 17; 51, 53) by a soldered joint.

10. Data communications equipment (11) in accordance with one of Claims 8 or 9
wherein the ends of the primary winding of both transformers (23, 37) are connected to the bus lines (15, 17; 51, 53) using plug connectors.

11. Data communications equipment (11 ) in accordance with one of Claims 8 or 9
wherein the ends of the secondary windings (33, 35, 45, 47) are provided with plug connectors for a detachable connection of a data source and/or data receiver.

12. Data communications equipment (11) in accordance with one of Claims 8 or 9
wherein the ends of the secondary windings (33, 35, 45, 47) are hardwired to a data source and/or data receiver.

13. Data communications equipment (11) in accordance with one of claims 1 to 4
wherein the bus (49) is formed by a coaxial cable with an inner conductor (51) forming one bus line and with an outer conductor (53) forming another bus line enclosing the inner conductor and wherein between the inner conductor (51) and the outer conductor (53) a terminating impedance (19, 21) substantially equal to the characteristic impedance (Zo) of the coaxial cable is connected at each end of the bus (49).

14. Data communications equipment (11) in accordance with Claim 13
wherein

   a) the primary winding (25) of the voltage transformer is connected between the inner conductor (51) and the outer conductor (53) of the coaxial cable and
   b) the current transformer (37) has a primary winding (39) of the current transformer inserted serially into the inner conductor (51) of the coaxial cable.

15. Data communications equipment (11) in accordance with Claim 14
wherein the ends of the primary winding of both transformers (23, 37) are connected to the one bus line and the other bus line by a soldered joint

16. Data communications equipment (11) in accordance with Claim 14 or 15
wherein the ends of the primary winding of both transformers (23, 37) are connected to the one bus line and the other bus line using plug connectors.

17. Data communications equipment (11) in accordance with Claim 14 or 15
wherein the ends of the secondary windings (33, 35, 45, 47) are provided with plug connectors for a detachable connection of a data source and/or data receiver.

18. Data communications equipment (11) in accordance with Claim 14 or 15
wherein the ends of the secondary windings (33, 35, 45, 47) are hardwired to a data source and/or data receiver.

**Patentansprüche**

1. Elektrische Datenübertragungseinrichtung (11) zum Übertragen digitaler Daten innerhalb eines Frequenzbereichs, umfassend:

   a) eine Busleitung (13; 49) zum Übertragen von Daten-Wanderwellen, die einen Wellenwiderstand (Zo) aufweist und deren Enden mit einer Abschlussimpedanz (19; 21) abgeschlossen sind, und
   b) mehreren Kopplern (CN), die an Stellen entlang der Busleitung (13; 49) konfiguriert sind, um Daten auf die Busleitung (13; 49) zu koppeln und Daten von der Busleitung (13; 49) auszukoppeln,

**dadurch gekennzeichnet, dass** der Koppler (CN) aufweist:

   a) sowohl einen spannungsmäßigen Spannungsübertrager (23), der mit der Busleitung (13; 49) verbunden ist und auf der Busleitung (13; 49) eine negative Signalreflexion gegenüber der Polarität der Daten-Wanderwelle hervorruft, wobei der spannungsmäßige Spannungsübertrager (23) eine Spannungsübertragerimpedanz besitzt,
   b) als auch einen strommäßigen Stromübertrager (37), der an die Busleitung (13; 49) angeschlossen ist und auf der Busleitung (13; 49) eine positive Signalrelexion bezüglich der Daten-Wanderwelle hervorruft, wobei der strommäßige Stromübertrager (37) eine Stromübertragerimpedanz besitzt,

wobei die Spannungsübertragerimpedanz und die Stromübertragerimpedanz derart angepasst sind, dass Signalreflexionen entgegengesetzter Polarität auf der Busleitung (13; 49), die durch den Spannungsübertrager (23) und den Stromübertrager (37) hervorgerufen werden, im wesentlichen ausgelöscht werden.

2. Datenübertragungseinrichtung (11) nach Anspruch 1, bei der Busleitung (13; 49) als Ring konfiguriert ist.

3. Datenübertragungseinrichtung (11) nach Anspruch 1 oder 2, bei der die Busleitung (13; 49) zwei Enden besitzt, von denen jedes mit der Abschlußimpedanz geschlossen ist, die im wesentlichen den gleichen Wert hat wie der Wellenwiderstand (Zo) der Busleitung (13; 49).

4. Datenübertragungseinrichtung (11) nach einem der obigen Ansprüche, bei der

   a) der Spannungsübertrager (23) eine Primärwicklung (25) und ein Sekundärwicklung (27) besitzt, und
   b) der Stromübertrager (37) mindestens eine Primärwicklung (39; 41) und eine Sekundärwicklung (43) besitzt, von denen die mindestens eine Primärwicklung (25; 39; 41) jeweils an die Busleitung (13; 49) angeschlossen ist und wobei ein Datensender und/oder ein Datenempfänger an die Sekundärwicklungen (25, 43) angeschlossen sind/ist.

5. Datenübertragungseinrichtung (11) nach einem der obigen Ansprüche, bei der die Busleitung (13) zwei gegeneinander verdrillte Busleiter (15, 17) und zwischen diesen Busleitern (15, 17) eine Abschlussimpedanz (19, 21) gleich dem Wellenwiderstand (Zo) der Busleitung (13; 49), angeschlossen an jedes Ende der Busleitung, aufweist.

6. Datenübertragungseinrichtung (11) nach Anspruch 5, bei jeder der beiden Busleiter (15, 17) von einem Abschirmungsdraht eingeschlossen ist.

7. Datenübertragungseinrichtung (11) nach Anspruch 5, bei der beide Busleiter (15, 17) von einem gemeinsamen Abschirmungsdraht eingeschlossen sind.

8. Datenübertragungseinrichtung (11) nach Anspruch 4, bei der

   a) die Primärwicklung (25) des Spannungsübertragers zwischen beide Busleiter (15, 17) gelegt ist, und
   b) der Stromübertrager (37) zwei Primärwicklungen (39, 41) aufweist, von denen jede seriell in eine der beiden Busleiter (15, 17) eingefügt ist.

9. Datenübertragungseinrichtung (11) nach Anspruch 8, bei der die Enden der Primärwicklung beider Übertrager (23, 37) durch eine Lötverbindung mit den Busleitern (15, 17; 51, 53) verbunden sind.

10. Datenübertragungseinrichtung (11) nach einem der Ansprüche 8 oder 9, bei der die Enden der Primärwicklung beider Übertrager (23, 37) mit Steckverbindern an die Busleiter (15, 17; 51, 53) angeschlossen sind.

11. Datenübertragungseinrichtung (11) nach einem der Ansprüche 8 oder 9, bei der Enden der Sekundärwicklungen (33, 35, 45, 47) mit Steckverbindern für eine lösbare Verbindung mit einer Datenquelle und/oder einem Datenempfänger ausgestattet sind.

12. Datenübertragungseinrichtung (11) nach einem der Ansprüche 8 oder 9, bei die Enden der Sekundärwicklung (33, 35, 45, 47) mit einer Datenquelle und/oder einem Datenempfänger direkt verdrahtet sind.

13. Datenübertragungseinrichtung (11) nach einem der Ansprüche 1 bis 4, bei der die Busleitung (49) durch ein Koaxialkabel gebildet wird, dessen Innenleiter (51) einen Busleiter bildet, und dessen Außenleiter (53) einen weiteren Busleiter bildet, der den Innenleiter einschließt, wobei zwischen dem Innenleiter (51) und dem Außenleiter (53) eine Abschlussimpedanz (19, 21) im wesentlichen gleich dem Wellenwiderstand (Zo) des Koaxialkabels an jedem Ende der Busleitung (49) vorgesehen ist.

14. Datenübertragungseinrichtung (14) nach Anspruch 13, bei der

   a) die Primärwicklung (25) des Spannungsübertragers zwischen den Innenleiter (41) und den Außenleiter (53) des Koaxialkabels geschaltet ist, und
   b) der Stromübertrager (37) eine Primärwicklung (39) des Stromübertragers seriell in den Innenleiter (51) des Koaxialkabels eingefügt hat.

15. Datenübertragungseinrichtung (11) nach Anspruch 14, bei der die Enden der Primärwicklung beider Übertrager (23, 37) an den einen Busleiter und an den anderen Busleiter mittels einer Lötverbindung angeschlossen sind.

16. Datenübertragungseinrichtung (11) nach Anspruch 14 oder 15, bei der die Enden der Primärwicklung beider Übertrager (23, 37) an die eine und die andere Busleitung über Steckverbinder angeschlossen sind.

17. Datenübertragungseinrichtung (11) nach Anspruch 14 oder 15, bei der die Enden der Sekundärwicklungen (33, 35, 45, 47) mit Steckverbindern für eine lösbare Verbindung mit einer Datenquelle und/oder einem Datenempfänger ausgestattet sind.

18. Datenübertragungseinrichtung (11) nach Anspruch 14 oder 15, bei der die Enden der Sekundärwicklungen (33, 35, 45, 47) mit einer Datenquelle und/oder einem Datenempfänger direkt verdrahtet sind.

## Revendications

1. Equipement électrique de communication de données (11) pour transmettre des données numériques dans une plage de fréquences, comprenant :

   a) un bus (13 ; 49) pour transmettre des ondes progressives de données qui a une impédance caractéristique (Zo) et dont les extrémités sont terminées avec une impédance terminale (19 ; 21) et
   b) une pluralité de coupleurs (CN) configurés au niveau de positions le long du bus (13 ; 49) pour coupler des données sur le bus (13 ; 49) et pour les découpler du bus (13 ; 49),

**caractérisé en ce que** ledit coupleur (CN) comprend à la fois

a) un transformateur de tension en mode de tension (23) s'interconnectant avec le bus (13 ; 49) et provoquant sur le bus (13 ; 49) une réflexion de signal négative vis-à-vis de la polarité de l'onde progressive de données, le transformateur de tension en mode de tension (23) ayant une impédance de transformateur de tension, et

b) un transformateur de courant en mode de courant (37) s'interconnectant avec le bus (13 ; 49) et provoquant sur le bus (13 ; 49) une réflexion de signal positive vis-à-vis de l'onde progressive de données, le transformateur de courant en mode de courant (37) ayant une impédance de transformateur de courant,

et moyennant quoi l'impédance de transformateur de tension et l'impédance de transformateur de courant sont adaptées de manière que les réflexions de signal de polarité opposée sur le bus (13 ; 49) provoquées par le transformateur de tension (23) et par le transformateur de courant (37) sont sensiblement éliminées.

2. Equipement de communication de données (11) selon la revendication 1, dans lequel le bus (13 ; 49) est configuré comme un anneau.

3. Equipement de communication de données (11) selon la revendication 1 ou 2, dans lequel le bus (13 ; 49) a deux extrémités, chacune desquelles est terminée avec l'impédance terminale ayant sensiblement la même valeur que l'impédance caractéristique (Zo) du bus (13 ; 49).

4. Equipement de communication de données (11) selon l'une quelconque des revendications précédentes, dans lequel

a) le transformateur de tension (23) a un enroulement primaire (25) et un enroulement secondaire (27) et

b) le transformateur de courant (37) a au moins un enroulement primaire (39 ; 41) et un enroulement secondaire (43), le au moins un enroulement primaire (25, 39, 41) étant chacun connecté au bus (13 ; 49) et un transmetteur de données et/ou un récepteur de données étant connectés aux enroulements secondaires (25, 43).

5. Equipement de communication de données (11) selon l'une quelconque des revendications précédentes, dans lequel le bus (13) a deux lignes de bus réciproquement torsadées (15, 17) et entre ces deux lignes de bus (15, 17), une impédance terminale (19, 21) égale à l'impédance caractéristique (Zo) du bus (13 ; 49) est connectée au niveau de chaque extrémité du bus.

6. Equipement de communication de données (11) selon la revendication 5, dans lequel chacune des lignes de bus (15, 17) est enfermée dans un câble de blindage.

7. Equipement de communication de données (11) selon la revendication 5, dans lequel les deux lignes de bus (15, 17) sont enfermées dans un câble de blindage commun.

8. Equipement de communication de données (11) selon la revendication 4, dans lequel

a) l'enroulement primaire (25) du transformateur de tension est connecté entre les deux lignes de bus (15, 17) et

b) le transformateur de courant (37) a deux enroulements primaires (39, 41) chacun desquels est inséré en série dans une des deux lignes de bus (15, 17).

9. Equipement de communication de données (11) selon la revendication 8, dans lequel les extrémités de l'enroulement primaire des deux transformateurs (23, 37) sont connectées aux lignes de bus (15, 17 ; 51, 53) par une jonction par brasage.

10. Equipement de communication de données (11) selon une des revendications 8 ou 9, dans lequel les extrémités de l'enroulement primaire des deux transformateurs (23, 37) sont connectées aux lignes de bus (15, 17 ; 51, 53) en utilisant des connexions enfichables.

11. Equipement de communication de données (11) selon une des revendications 8 ou 9, dans lequel les extrémités des enroulements primaires (33, 35, 45, 47) sont munis de connecteurs enfichables pour une connexion amovible à une source de données et/ou un récepteur de données.

12. Equipement de communication de données (11) selon une des revendications 8 ou 9, dans lequel les extrémités des enroulements primaires (33, 35, 45, 47) sont câblées à une source de données et/ou un récepteur de données.

13. Equipement de communication de données (11) selon une des revendications 1 à 4, dans lequel le bus (49) est formé par un câble coaxial avec un conducteur intérieur (51) formant une ligne de bus et avec un conducteur extérieur (53) formant une autre ligne de bus enfermant le conducteur intérieur et dans lequel, entre le conducteur intérieur (51) et le conducteur extérieur (53) une impédance terminale (19, 21) sensiblement égale à l'impédance caractéristique (Zo) du câble coaxial est connectée à chaque extrémité du bus (49).

14. Equipement de communication de données (11) selon la revendication 13, dans lequel

> a) l'enroulement primaire (25) du transformateur de tension est connecté entre le conducteur intérieur (51) et le conducteur extérieur (53) du câble coaxial et
> b) le transformateur de courant (37) a un enroulement primaire (39) du transformateur de courant inséré en série dans le conducteur intérieur (51) du câble coaxial.

15. Equipement de communication de données (11) selon la revendication 14, dans lequel les extrémités de l'enroulement primaire des deux transformateurs (23, 37) sont connectées à l'une ligne de bus et à l'autre bus de ligne par une jonction par brasage.

16. Equipement de communication de données (11) selon la revendication 14 ou 15, dans lequel les extrémités de l'enroulement primaire des deux transformateurs (23, 37) sont connectées à l'une ligne de bus et à l'autre bus de ligne en utilisant des connecteurs enfichables.

17. Equipement de communication de données (11) selon la revendication 14 ou 15, dans lequel les extrémités des enroulements primaires (33, 35, 45, 47) sont munis de connecteurs enfichables pour une connexion amovible à une source de données et/ou un récepteur de données.

18. Equipement de communication de données (11) selon la revendication 14 ou 15, dans lequel les extrémités des enroulements primaires (33, 35, 45, 47) sont câblées à une source de données et/ou un récepteur de données.

## FIG.1

## FIG.2

## FIG.3

## FIG. 4

## FIG.5

## FIG.6

## FIG.7

## FIG. 8

## FIG. 9

## FIG.10

## FIG.11

166 nsec

500 nsec